(19) **Europäisches Patentamt**

**European Patent Office**

**Office européen des brevets**

(11) **EP 1 542 476 A2**

(12) **EUROPEAN PATENT APPLICATION**

(43) Date of publication:
15.06.2005 Bulletin 2005/24

(51) Int Cl.[7]: **H04N 11/04**

(21) Application number: 04026085.3

(22) Date of filing: 03.11.2004

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(30) Priority: **10.12.2003 US 733876**

(71) Applicant: **MICROSOFT CORPORATION**
**Redmond, WA 98052 (US)**

(72) Inventors:
• **Wu, Feng**
**Beijing 102209 (CN)**

• **Shen, Jacky**
**Haidian District Beijing, 100088 (CN)**
• **Yuan, Lujun**
**Beijing (CN)**
• **Li, Shipeng**
**Redmond, Washington 98053 (US)**

(74) Representative: **Grünecker, Kinkeldey,**
**Stockmair & Schwanhäusser Anwaltssozietät**
**Maximilianstrasse 58**
**80538 München (DE)**

(54) **Color space coding framework**

(57) A coding framework that provides conversions between one or more video formats without the use of a transcoder. A video information stream that includes color information formatted in accordance with a first color space sampling format is split into a base stream and an enhanced stream. The base stream is formatted in accordance with a second color space sampling format. The enhanced stream includes enhanced information that when combined with the base stream re-constructs the first format. During encoding, the enhanced stream may be encoded using spatial information related to the base information stream. An output stream of the encoded base stream and encoded enhanced stream may be interleaved, concatenated, or include independent files for the encoded base stream and the encoded enhanced stream.

Fig. 11

**Description**

## TECHNICAL FIELD

This invention relates to multimedia, and in particular to a color space coding framework for handling video formats.

## BACKGROUND

The consumer electronics market is constantly changing. One reason that the market is constantly changing is that consumers are demanding higher video quality in their electronic devices. As a result, manufacturers are designing higher resolution video devices. In order to support the higher resolution video devices, better video formats are being designed that provide better visual quality.

There are two main color spaces from which the majority of video formats are derived. The first color space is commonly referred to as the RGB (Red Green Blue) color space (hereinafter referred to as RGB). RGB is used in computer monitors, cameras, scanners, and the like. The RGB color space has a number of formats associated with it. Each format includes a value representative of the Red, Green, and Blue chrominance for each pixel. In one format, each value is an eight bit byte. Therefore, each pixel consumes 24 bits (8 bits (R) + 8 bits (G) + 8 bits (B)). In another format, each value is 10 bits. Therefore, each pixel consumes 30 bits.

Another color space has been widely used in television systems and is commonly referred to as the YCbCr color space or YUV color space (hereinafter referred to as YUV). In many respects, YUV provides superior video quality in comparison with RGB at a given bandwidth because YUV takes into consideration that the human eye is more sensitive to variations in the intensity of a pixel than in its color variation. As a result, the color difference signal can be sub-sampled to achieve bandwidth saving. Thus, the video formats associated with the YUV color space, each have a luminance value (Y) for each pixel and may share a color value (represented by U and V) between two or more pixels. The value of U (Cb) represents the blue chrominance difference between B-Y and the value of V (Cr) represents the red chrominance difference between R-Y A value for the green chrominance may be derived from the Y, U, and V values. YUV color space has been used overwhelmingly in video coding field.

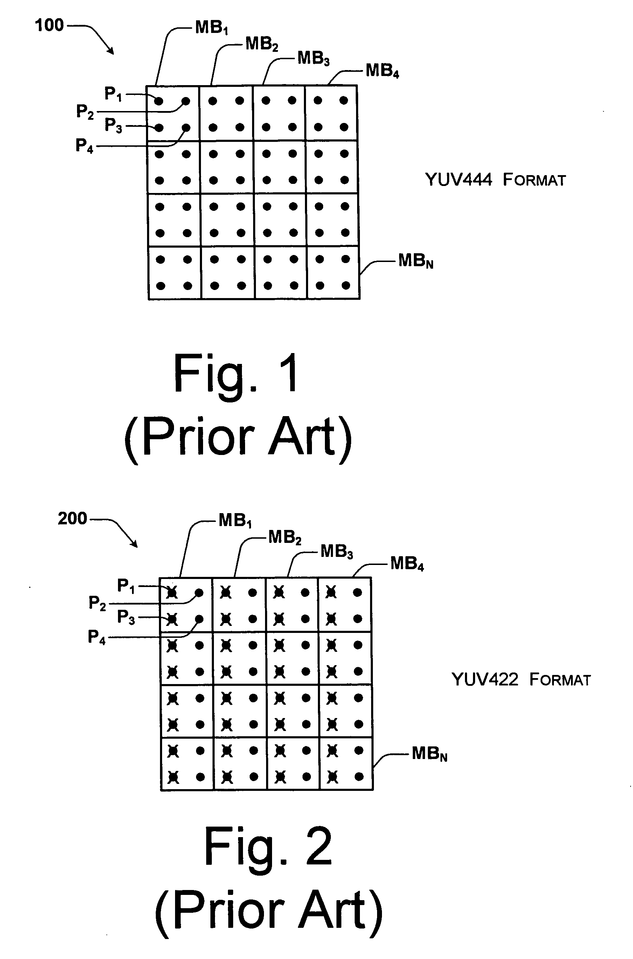

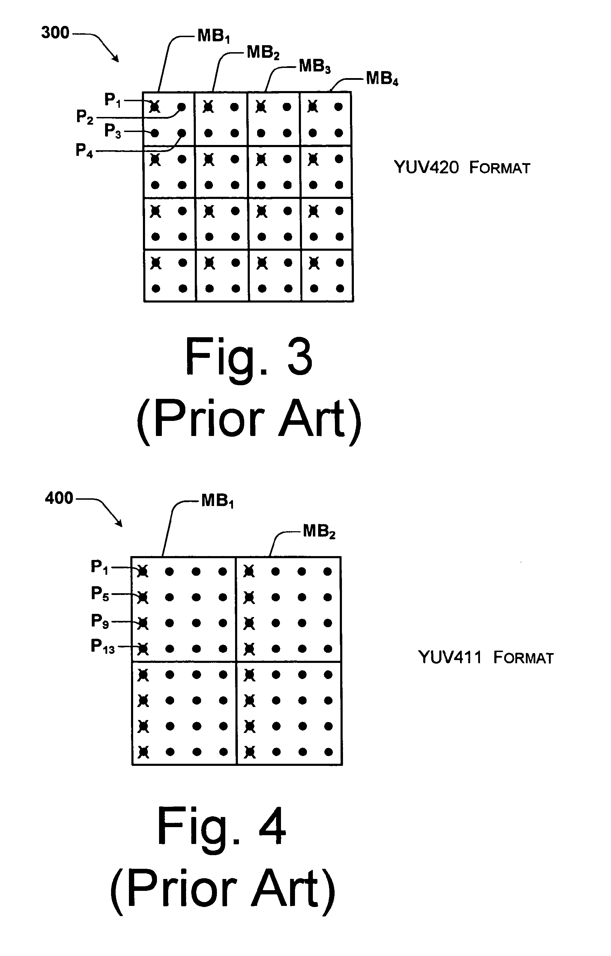

There are several YUV formats currently existing. FIGURES 1-5 illustrate five of the more common YUV formats: YUV444, YUV422, YUV420, YUV411, and YUV410, respectively. FIGURES 1-5 graphically illustrate arrays 100-500, respectively. The illustrated arrays are each eight by eight array of blocks. However, the arrays may be of any dimension and do not necessarily need to be square. Each block in the array (denoted by a dot) represents an array of pixels. For convenience and keeping with conventional video techniques, the following discussion describes each block as representing one pixel (e.g., pixels $P_1$-$P_4$). Therefore, hereinafter, the term pixel will be used interchangeably with the term block when referring to arrays 100-500. The pixels are grouped into macroblocks (e.g., macroblocks $MB_1$-$MB_N$) based on the sampling that is desired for the target video format. FIGURES 1-3 illustrate each macroblock having four pixels (e.g., $P_1$-$P_4$). FIGURES 4-5 illustrate each macroblock having sixteen pixels (e.g., $P_1$-$P_{16}$). Each of the YUV formats will now be described in more detail.

FIGURE 1 graphically illustrates the YUV444 format. In the YUV444 format, each pixel is represented by a Y, U, and V value. For example, for pixel $P_1$, the YUV444 format includes eight bits for the $Y_1$ value, eight bits for the $U_1$ value, and eight bits for the $V_1$ value. Thus, each pixel is represented by twenty-four bits. Because this format consumes twenty-four bits for each pixel, other YUV formats are down-sampled from the YUV444 format so that the number of bits per pixel is reduced. The reduction in bits per pixel provides improvement in streaming efficiency. However, down-sampling results in a corresponding degradation in video quality.

FIGURE 2 graphically illustrates the YUV422 format. In the YUV422 format, each pixel is represented by a Y value. However, in contrast with the YUV444 format, the U and V values are optionally filtered and then down-sampled. The filtering and down-sampling may be performed simultaneously using known techniques. Array 200 conceptually illustrates the results from the down-sampling by illustrating every second horizontal pixel in the array 200 as sampled. The sampled pixels are denoted with an "X" in array 200. Thus, pixels $P_1$ and $P_3$ are each represented by twenty-four bits. However, pixels $P_2$ and $P_4$ are each represented by eight bits (Y value only). The average number of bits per pixel in the YUV422 format is sixteen bits ((24+24+8+8)/4). The YUV422 is a packed YUV color space, which means that the Y, U, and V samples are interleaved. Typically, standards that support the YUV422 format, such as MPEG-2 and MPEG-4, code all the chrominance blocks together. For example, the YUV422 format for MPEG-2 stores the YUV422 data in memory as Y1 U1 Y2 V1, where Y1 and Y2 represent the luminance value for pixels $P_1$ and $P_2$, respectively. Y1 and Y2 represent two luminance blocks. U1 and V1 represent two chrominance blocks.

FIGURE 3 graphically illustrates the YUV420 format. Array 300 conceptually illustrates the results from the optional filtering and down-sampling from the YUV444 format by illustrating every second horizontal and every second vertical pixel in the array 300 as sampled. Again, the sampled pixels are denoted with an "X" in array 300. Thus, for the YUV420 format only pixel $P_1$ is represented by twenty-four bits. Pixels $P_2$-$P_4$ is each represented by eight bits (Y value only). The average number of bits per pixel in the YUV420 format is twelve bits ((24+8+8+8)/4). The YUV420 is a planar format, not a packed format. Thus, the YUV420 data is stored in memory such that all of the Y data is stored first, then the U data, then all of the V data. Therefore, there are four luminance blocks, one U chrominance block and one V chrominance block.

FIGURE 4 graphically illustrates the YUV411 format. Array 400 conceptually illustrates the results from the optional filtering and down-sampling from the YUV444 format by illustrating every fourth horizontal pixel in array 400 as sampled. Thus, pixels $P_1$, $P_5$, $P_9$, and $P_{13}$ are each represented by twenty-four bits and the other twelve pixels are represented by eight bits. The average number of bits per pixel in the YUV411 format is twelve bits.

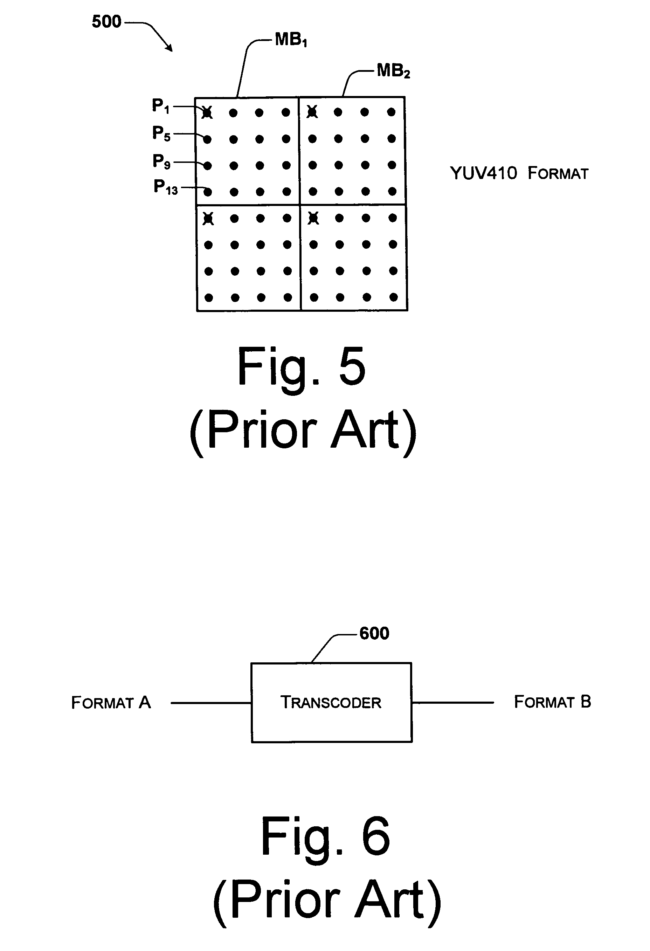

FIGURE 5 graphically illustrates the YUV410 format. Array 500 conceptually illustrates the results from the optional filtering and down-sampling from the YUV444 format by illustrating every fourth horizontal pixel and every fourth vertical pixel in array 500 as sampled. Thus, only pixel $P_1$ is represented by twenty-four bits and the other fifteen pixels are represented by eight bits. The average number of bits per pixel in the YUV410 format is 10 bits.

Thus, based on the quality that is desired and the transmission bandwidths that are available, an electronic device manufacturer may design their electronic devices to operate with any of these and other formats. However, later when transmission bandwidths increase and/or consumers begin to demand higher quality video, the existing electronic devices will not support the higher quality video format. For example, currently many digital televisions, set-top boxes, and other devices are designed to operate with the YUV420 video format. In order to please the different categories of consumers, there is a need to accommodate both video formats.

Television stations could broadcast both the higher video format (e.g., YUV422) and the lower video format (e.g., YUV420). However, this option is expensive to the television broadcasters because it involves having the same content on two different channels, which consumes valuable channel resources. Thus, currently, the higher resolution format is transcoded to the lower resolution format either at the server side or at the client side. FIGURE 6 is a block diagram illustrating the transcoding process. A transcoder 600 accepts an input format, such as Format A (e.g., YUV422), and outputs an output format, such as Format B (e.g., YUV420). During the transcoding process, the entire video input format is decoded, which includes the Y, U, and V components. The Y component must be decoded along with the UV components because the UV components are motion compensated and the resultant motion vectors can only be obtained by decoding the Y component. Thus, the luminance blocks and all the chrominance blocks are decoded to get a reconstructed version of the original video in the input format. Then, chrominance components are down-sampled to convert the input format to the desired output format. Finally, the newly generated video is encoded again to generate a bit stream in the output format (Format B). This transcoding process is expensive because it is generally equivalent to an encoder plus a decoder. Fast transcoding methods exist, but generally result in quality loss.

The transcoder 600 may exist at the client side, the server side, or at another location. If the transcoding process is performed at the client side, consumers that subscribe to the high quality video may access the high quality video while other consumers can access the lower quality video. If the transcoding process is performed at the server, none of the consumers can access the high quality video. Neither option is optimal because the transcoding process is very expensive and generally leads to quality degradation. Therefore, there is a need for a better solution for providing high quality video while maintaining operation with existing lower quality video devices.

**SUMMARY**

The present color space coding framework provides conversions between one or more video formats without the use of a transcoder. A video information stream that includes color information formatted in accordance with a first color space sampling format is split into a base stream and an enhanced stream. The base stream is formatted in accordance with a second color space sampling format. The enhanced stream includes enhanced information that when combined with the base stream re-constructs the first format. During encoding, the enhanced stream may be encoded using spatial information related to the base information stream. An output stream of the encoded base stream and encoded enhanced stream may be interleaved, concatenated, or may include independent files for the encoded base stream and the encoded enhanced stream.

**BRIEF DESCRIPTION OF THE DRAWINGS**

FIGURES 1-5 are a series of graphical depictions of various encoding formats derived from the YUV color space.
FIGURE 6 is a block diagram of a transcoder for converting between two different video formats.
FIGURE 7 illustrates an exemplary computing device that may utilize the present exemplary coding framework.
FIGURE 8 is a block diagram of a chroma separator for separating a first video encoded format into multiple streams in accordance with the exemplary color space coding framework.

FIGURE 9 is a block diagram of a chroma compositor for merging the multiple streams into the first video encoded format in accordance with the exemplary color space coding framework.

FIGURE 10 is a graphical depiction of the first video encoded format and the multiple streams after the chrominance blocks have been separated from the first video encoded format by the chroma separator shown in FIGURE 8.

FIGURE 11 is a block diagram of an encoder which incorporates the present color space coding framework.

FIGURE 12 is a block diagram of a decoder which incorporates the present color space coding framework.

FIGURE 13 is a graphical representation of an exemplary bit stream for transmitting the multiple bit streams shown in FIGURES 11 and 12.

FIGURE 14 is a graphical representation of another exemplary bit stream for transmitting the multiple bit streams shown in FIGURES 11 and 12.

FIGURES 15 - 20 illustrate exemplary integer lifting structures suitable for use in conjunction with FIGURES 8 and 9.

## DETAILED DESCRIPTION

Briefly stated, the present color space coding framework provides a method for creating multiple streams of data from an input video encoded format. The multiple streams of data includes a base stream that corresponds to a second video encoded format and at least one enhanced stream that contains enhanced information obtained from the input video encoded format. By utilizing the present method, multimedia systems may overcome the need to transcode the input video format into other video formats in order to support various electronic devices. After reading the following description, one will appreciate that using the present color space coding framework, an electronic device configured to operate using a lower quality format may easily discard periodic chrominance blocks and still have the resulting video displayed correctly. The following discussion uses the YUV422 and YUV420 video formats to describe the present coding framework. However, one skilled in the art of video encoding will appreciate that the present coding framework may operate with other video formats and with other multimedia formats that can be separated into blocks with information similar to the information contained within the chromo blocks for video formats.

Thus, the following description sets forth a specific exemplary coding framework. Other exemplary coding frameworks may include features of this specific embodiment and/or other features, which aim to eliminate the need for transcoding multimedia formats (e.g., video formats) and aim to provide multiple multimedia formats to electronic devices.

The following detailed description is divided into several sections. A first section describes an exemplary computing device which incorporates aspects of the present coding framework. A second section describes individual elements within the coding framework. A third section describes the exemplary bit streams that are encoded and decoded in accordance with the present color space coding framework.

### Exemplary Computing Device

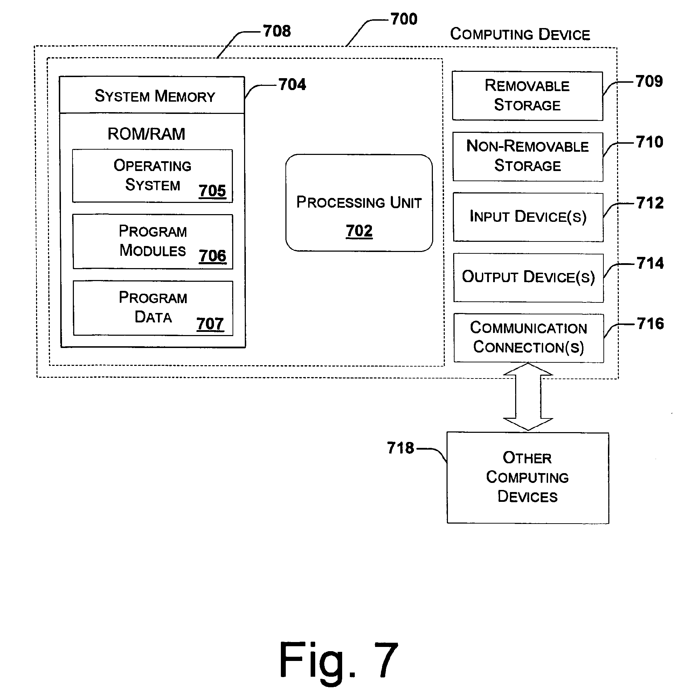

FIGURE 7 illustrates an exemplary computing device that may utilize the present exemplary coding framework. An example of a computing device includes a set-top box that enables a television set to become a user interface to the Internet and enables the television set to receive and decode digital television (DTV) broadcasts. In another configuration, the exemplary computing device may be separate from the set-top box and provide input to the set-top box. Another example of a computing device includes a video recording device, such as a digital camcorder or digital camera. In a very basic configuration, computing device **700** typically includes at least one processing unit **702** and system memory **704**. Depending on the exact configuration and type of computing device, system memory **704** may be volatile (such as RAM), non-volatile (such as ROM, flash memory, etc.) or some combination of the two. System memory **704** typically includes an operating system **705**, one or more program modules **706**, and may include program data **707**. A Web browser may be included within the operating system **705** or be one of the program modules **706**. The Web browser allows the computing device to communicate via the Internet.

Computing device **700** may have additional features or functionality. For example, computing device **700** may also include additional data storage devices (removable and/or non-removable) such as, for example, magnetic disks, optical disks, or tape. Such additional storage is illustrated in FIGURE 7 by removable storage **709** and non-removable storage **710**. Computer storage media may include volatile and nonvolatile, removable and non-removable media implemented in any method or technology for storage of information, such as computer readable instructions, data structures, program modules, or other data. System memory **704**, removable storage **709** and non-removable storage **710** are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device **700**. Any such computer storage media may be part of device **700**. Computing device **700** may also have input device(s) **712** such as keyboard, mouse, pen, voice input device, touch input device, etc. Output device(s) **714** such as a display, speakers, printer, etc. may also be included. These devices are well know in the art and need not be discussed at length here. Computing device **700** may also have one or more devices (e.g., chips) for video and audio decoding and for processing performed in accordance with the present coding framework.

Computing device **700** may also contain communication connections **716** that allow the device to communicate with other computing devices **718**, such as over a network. Communication connections **716** are one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Thus, communication media includes telephone lines and cable. The term computer readable media as used herein includes both storage media and communication media.

## Exemplary Coding Framework

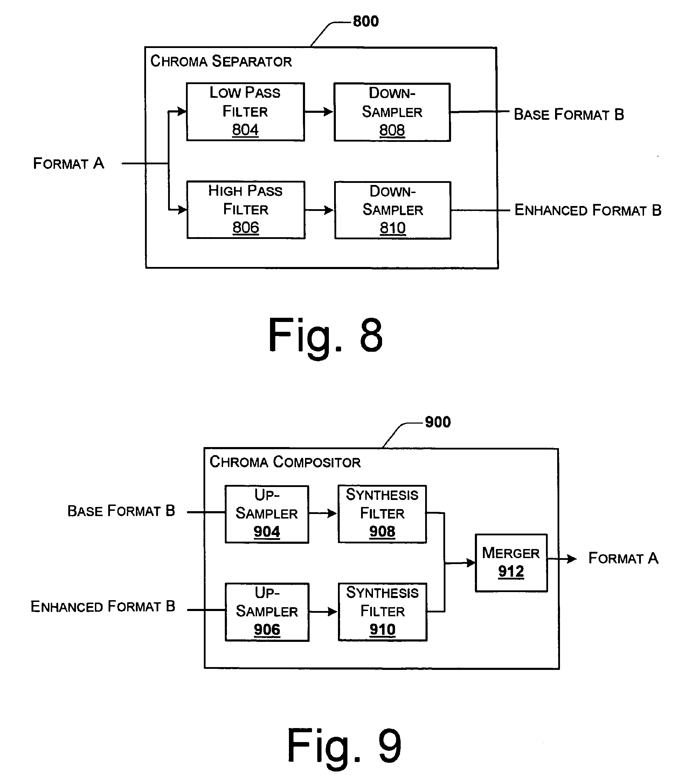

FIGURE 8 is a block diagram of a chroma separator 800 for separating a first video encoded format (e.g., Format A) into multiple streams (e.g., base format B stream and enhanced format B stream). The process for separating the base stream from format A is now described. Those skilled in the art will appreciate the common practice of performing low pass filtering before down-sampling from a higher resolution to a lower resolution in order to improve the quality of the down-sampled format. Thus, the chroma separator 800 may include an optional low pass filter 804. The low pass filter may be any of the various commercial low pass filters. For example, the low pass filter proposed to the Moving Picture Experts Group (MPEG) for MPEG-4 may be used. The coefficients for the MPEG-4 low pass filter are as follows: c = [5/32, 11/32, 11/32, 5/32]. Alternatively, the chroma separator 800 may keep the YUV values without processing the YUV values through low pass filter 804. The process for separating the base stream from format A also includes a down-sampler 808. Down-sampler 808 is configured to keep the chrominance blocks for each line and row specified for the desired output format. The conversion of format A into base format B is known to those skilled in the art and is commonly performed today. The outcome of down-sampler 808 is the base format B stream (e.g., YUV420).

In another embodiment, filter 804 and the down-sampler 808 may also be combined into a convolution operation. In general, convolution includes a combination of multiplication, summarization, and shifting. One exemplary convolution operation is as follows:

$$L_k = c_0 {}^*f_{2k} + c_1 {}^*f_{2k+1} + c_2 {}^*f_{2k+2} + c_3 {}^*f_{2k+3} \qquad \text{eq. 1}$$

Where k=0,1,2,...n-1.

$$H_k = d_0 {}^*f_{2k} + d_1 {}^*f_{2k+1} + d_2 {}^*f_{2k+2} + d_3 {}^*f_{2k+3} \qquad \text{eq. 2}$$

Where k=0, 1,2,... n-1.

At boundary pixels, mirror extension may be applied. One exemplary method for applying mirror extension for when there is an even number of taps is as follows:

$$f_{-2}=f_1,\ f_{-1}=f_0,\ f_{2n}=f_{2n-1},\ f_{2n+1}=f_{2n-2} \qquad \text{eq. 3}$$

Another exemplary method for applying mirror extension for when there is an odd number of taps is as follows:

$$f_{-2}=f_2,\ f_{-1}=f_1,\ f_{2n}=f_{2n-2},\ f_{2n+1}=f_{2n-3} \qquad \text{eq. 4}$$

In equations 1-4, n is the vertical dimension of the UV signal and $f_k$ corresponds to the pixel value at position k in format A chrominance blocks. $L_k$ and $H_k$ represent pixel values at position k of the resulting base format B and enhanced format B streams.

The process for separating the enhanced stream from format A is now described. The chroma separator 800 may include an optional high pass filter 806. An exemplary high pass filter 806 may have the following coefficients: d = [5/12, 11/12, -11/12, -5/12]. Alternatively, the chroma separator 800 may keep the YUV values from the first video encoded format without applying filter 806. The process for separating the enhanced stream from format A includes a down-sampler 810. In one embodiment, down-sampler 810 is configured to keep all the lines which down-sampler 808 did not keep. For example, when converting YUV424 to YUV420, down-sampler 810 may keep all the even lines of the output of the high pass filter. In the past, during the transcoding process, these "extra" chrominance blocks were simply discarded. However, in accordance with the present color space coding framework, these "extra" chrominance blocks become the enhanced format B stream. As will be described in detail below, by maintaining these "extra" chrominance blocks in a separate stream, the inefficient transcoding process may be avoided when converting between two formats.

In another embodiment, the filter 806 and the down sampler 810 may be combined into a convolution operation similar to the convolution operation described above with equations 1-4 and the corresponding text.

In another exemplary embodiment, a wavelet transform (i.e., decomposition and down sampling) may be applied that will generate the two desired output formats: base format B and enhanced format B. For example, a modified 9/7 Daubechies wavelet transform may be applied. Additional information describing the 9/7 wavelet may be obtained from the JPEG-2000 reference. The standard 9/7 Daubechies wavelet transform (i.e., filtering plus down-sampling) converts Format A to Format B and Enhanced Format B. The low pass analysis filter coefficients and high pass analysis filter coefficients are:

L (9):

0.026748757411,
-0.016864118443,
-0.078223266529,
0.266864118443,
0.602949018236,
0.266864118443,
-0.078223266529,
-0.016864118443,
0.026748757411

H (7):

0.045635881557,
-0.028771763114,
-0.295635881557,
0.557543526229,
-0.295635881557,
-0.028771763114,
0.045635881557.

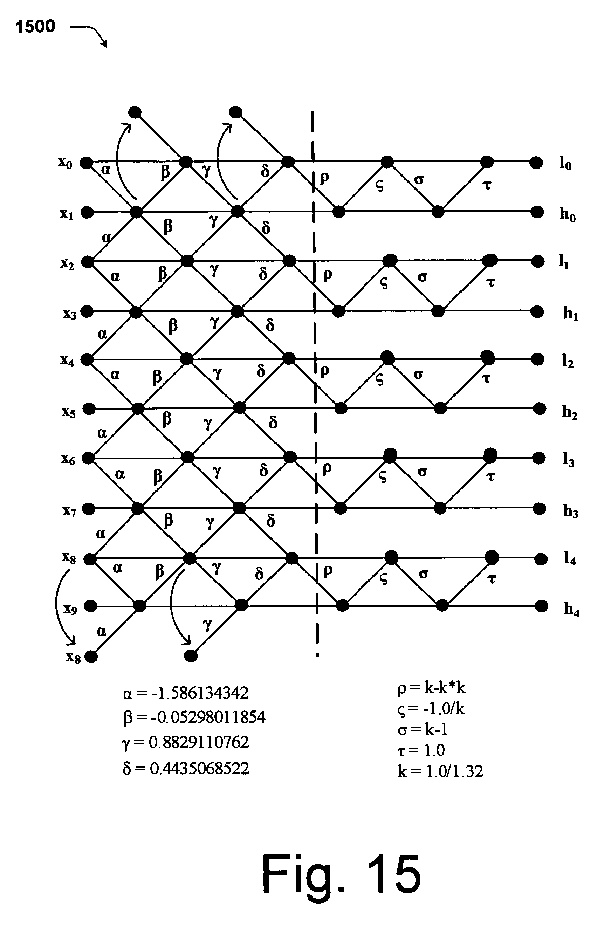

To ensure a minimal precision loss during the transform, an integer lifting scheme is used to achieve 9/7 wavelet transform. The integer lifting scheme takes every intermediate result during the process and converts the results to an integer either by rounding, ceiling, flooring, or clipping. An exemplary integer lifting structure 1500 is illustrated in FIGURE 15. Processing is performed from left to right. In FIGURE 15, dots $x_0 \sim x_9$ represent the original pixels of Format A. Dots $l_0 \sim l_4$ represent pixels in Format B. Dots $h_0 \sim h_4$ represent pixels in Enhanced Format B. A curved arrow represents a mirror extension. A directional branch with a symbol (alpha, beta, etc) represents the application of a multiplication operation with a first multiplier being a coefficient associated with the applicable symbol and a second multiplier being the value of the node it leaves. A horizontal branch represents the application of a carry operation for the value of one node to the next stage without scaling. Branches merging at one node means all the values carried in these branches are summed together to generate the value of the merging node. A modification to the value k may be applied to ensure that the resulting coefficients of Format B are in the range of [0, 255].

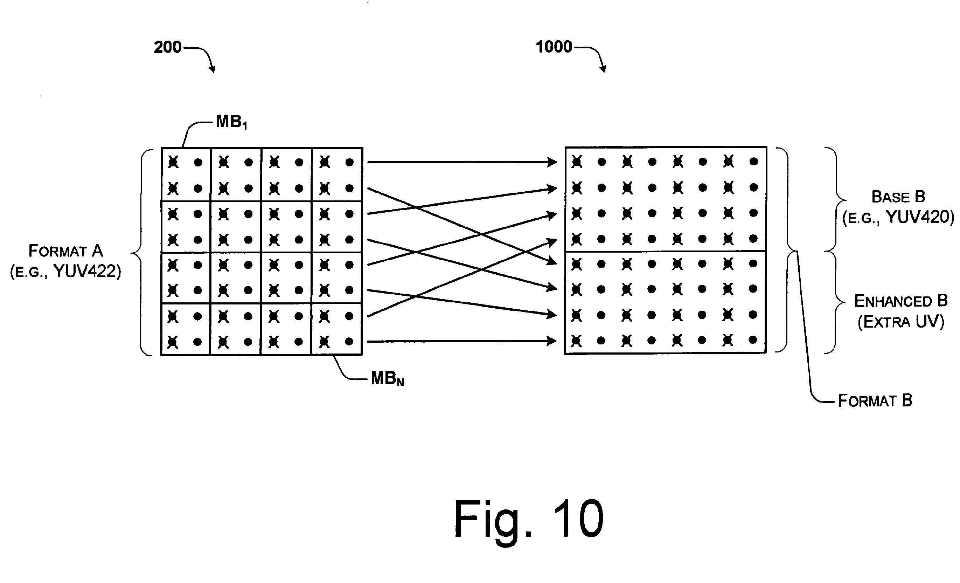

The outcome of chroma separator 800 when Format A corresponds to YUV422 and the base format corresponds to YUV420 is illustrated in FIGURE 10. FIGURE 10 illustrates array 200 that has been sampled in accordance with a first video encoded format (e.g., video encoded format YUV422) as illustrated in FIGURE 2. Each macroblock (e.g., macroblock $MB_1$) includes four luminance blocks and two chrominance blocks: one for U and one for V The memory layout for one macroblock in format YUV422 entails four luminance blocks and four chrominance blocks: Y1 Y2 Y3 Y4 U1 V1 U2 V2. If this YUV422 format needs to be utilized by a electronic device that accepts YUV420 format (illustrated in FIGURE 3), in the past, the YUV422 format was input into a transcoder that decoded each chromo block, manipulated the chromo blocks, and then encoded the chromo blocks again.

However, using the present color space coding framework, the YUV422 is encoded in a new manner, graphically depicted in array 10000 as format B, which includes base B and enhanced B. In contrast to prior conversion methods that discarded chrominance blocks that were not needed, the present color space coding framework rearranges the chrominance blocks such that the output has essentially two or more streams. The first stream includes the chrominance blocks for a base format, such as YUV420, generated within the chromo separator 800 via the optional low pass filter 804 and the down-sampler 806. The second stream includes the extra chrominance blocks from the input format, but which are not used by the base format. Thus, the first stream comprises a full set of chrominance blocks associated with the base format to ensure that the base format is fully self-contained. The second stream is generated within the chromo separator 800 via the optional high pass filter 806 and the down-sampler 810. Thus, the second stream represents an enhanced stream, which, together with the first stream, reconstructs the input stream (format A). As graphically depicted, the creation of the base stream and the enhanced stream may occur by shuffling the chrominance blocks (pixels), which manipulate the layout of the chrominance components.

FIGURE 9 is a block diagram of a chroma compositor for merging the base format B stream and the enhanced format B stream into the first video encoded format (e.g., format A). The chroma compositor 900 includes an up-sampler 904 and an optional synthesis filter 908 for processing the base format B stream that is input into the chroma compositor 900. In addition, chroma compositor 900 includes an up-sampler 906 and an optional synthesis filter 910 for processing the enhanced format B stream that is input into the chroma compositor 900. The chroma compositor 900 also includes a merger 912 that merges the output after up-sampling and filtering into the desired first video encoded format. In one exemplary embodiment involving YUV424 and YUV420 formats, merger 912 sums up the output of two synthesis filters to reconstructs the YUV424 video stream.

Up-sampler 904 pads the incoming stream as needed. The optional synthesis filter 908 may employ coefficients as follows: c' = [-5/12, 11/12, 11/22, -5/12].

Up-sampler 906 also pads its incoming stream as need. The optional synthesis filter 910 may employ coefficients as follows: d'= [-5/32, 11/32, - 11/32, 5/32]. The up-sampler 904 and the synthesis filter 908 may be merged into a convolution operations as follows:

$$f_{2k} = 2 *(c_0' * L_k + c_2' *L_{k-1} + d_0' *H_k + d_2' *H_{k-1} \qquad \text{eq. 5}$$

Where k=0,1,2,...n-1.

$$f_{2k+1} = 2 *(c_1 '* L_k + c_3' *L_{k-1} + d_1' *H_k + d_3' *H_{k-1} \qquad \text{eq. 6}$$

Where k=0,1,2,...n-1.

Up-sampler 904 and 906 performs exactly the reverse operation of the down-sampler 806 and 810 respectively. For those lines discarded in 806 and 810, 904 and 906 will fill zero. After the up-sampler, the signal is restored to the original resolution.

At boundary pixels, mirror extension may be applied. One exemplary method for applying mirror extension for when there is an even number of taps, is as follows:

$$L_{-1}=L_0, H_{-1}=H_0 \qquad \text{eq. 7}$$

Another exemplary method for applying mirror extension for when there is an odd number of taps, is as follows:

$$L_{-1}=L_1, H_{-1}=H_1 \qquad \text{eq. 8}$$

In equations 5-8, n is the vertical dimension of the UV signal and $f_k$ corresponds to the pixel value at position k of Format A chrominance. $L_k$ and $H_k$ represent pixel values at position k of the resulting base format B and enhanced format B streams.

In another embodiment for decoder 1200, an inverse 9/7 wavelet transform (i.e., up-sampling and filtering) is performed to reconstruct Format A video from the base Format B and the Enhanced Format B. The low pass synthesis filter coefficients and high pass synthesis filter coefficients are as follows:

L (7):

-0.045635881557,
-0.028771763114,
0.295635881557,
0.557543526229,
0.295635881557,
-0.028771763114,
-0.045635881557

H (9):

0.026748757411,
0.016864118443,
-0.078223266529,
-0.266864118443,
0.602949018236,
-0.266864118443,
-0.078223266529,
0.016864118443,
0.026748757411.

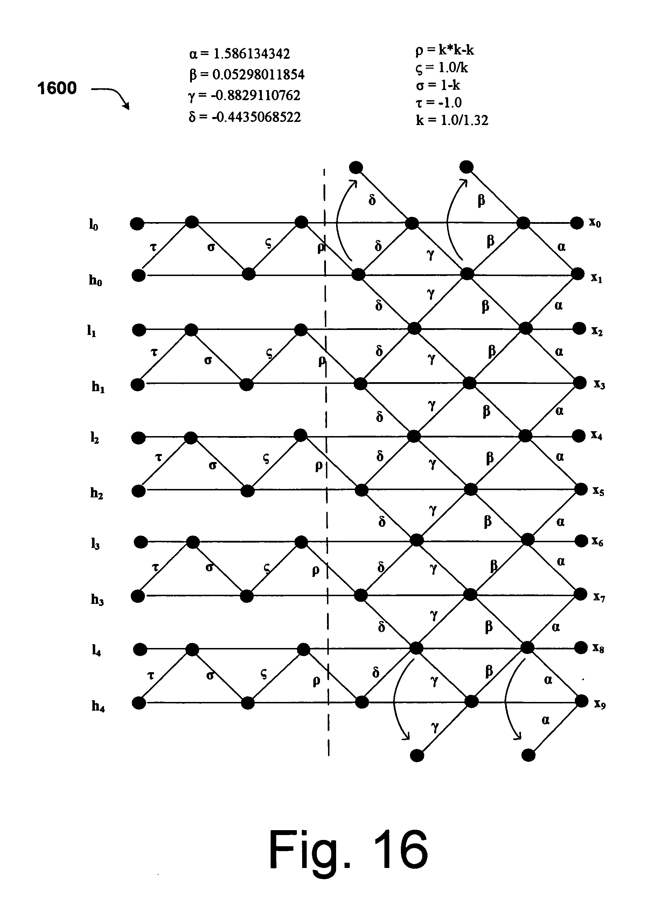

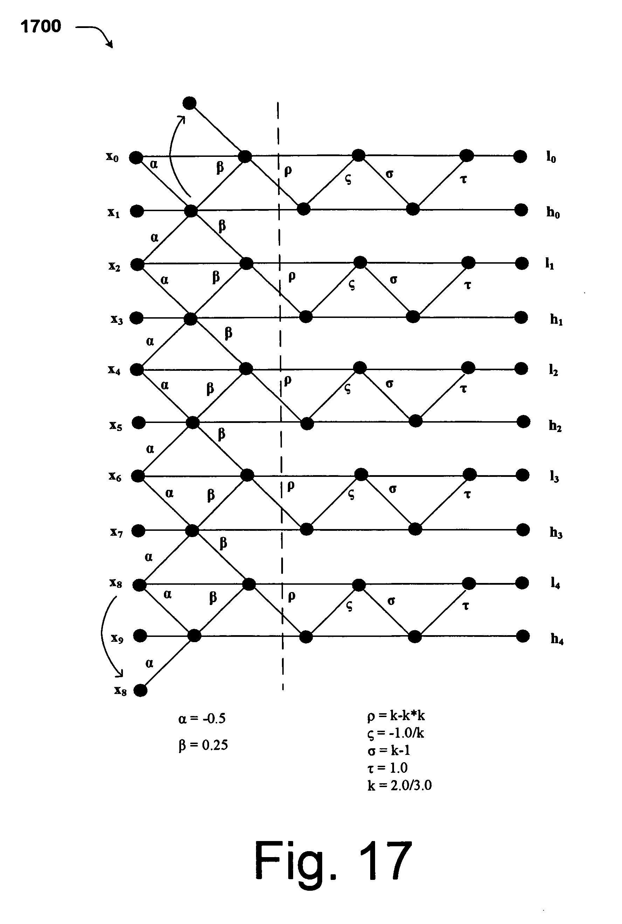

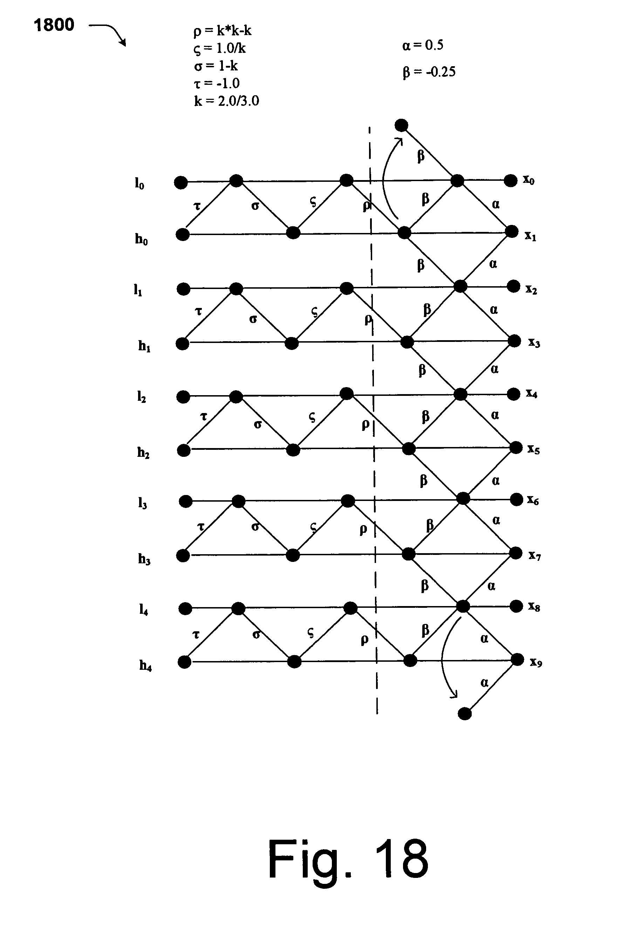

FIGURE 16 illustrates the corresponding integer lifting structure 1600 associated with the inverse modified 9/7 Daubechies wavelet transform. The symbols as defined for FIGURE 15 describe integer lifting structure 1600.
The encoder 1100 and decoder 1200 may be implemented using various wavelet transforms. For example, a modified 5/3 Daubechies wavelet transform may be used. FIGURES 17-18 illustrate the integer lifting structures 1700 and 1800 associated with the modified 5/3 Daubechies wavelet transform and the inverse modified 5/3 Daubechies wavelet transform, respectively. Again, the symbols as defined for FIGURE 15 describe integer lifting structures 1700 and 1800.
The corresponding low pass analysis filter coefficients and high pass analysis filter coefficients are:

L(5): -1/8, 1/4, 3/4, 1/4, -1/8

H(3): -1/4, 1/2, -1/4.

The low pass synthesis filter coefficients and high pass synthesis filter coefficients are:

L(3): 1/4, 1/2, 1/4

H(5): -1/8, -1/4, 3/4, -1/4, -1/8.

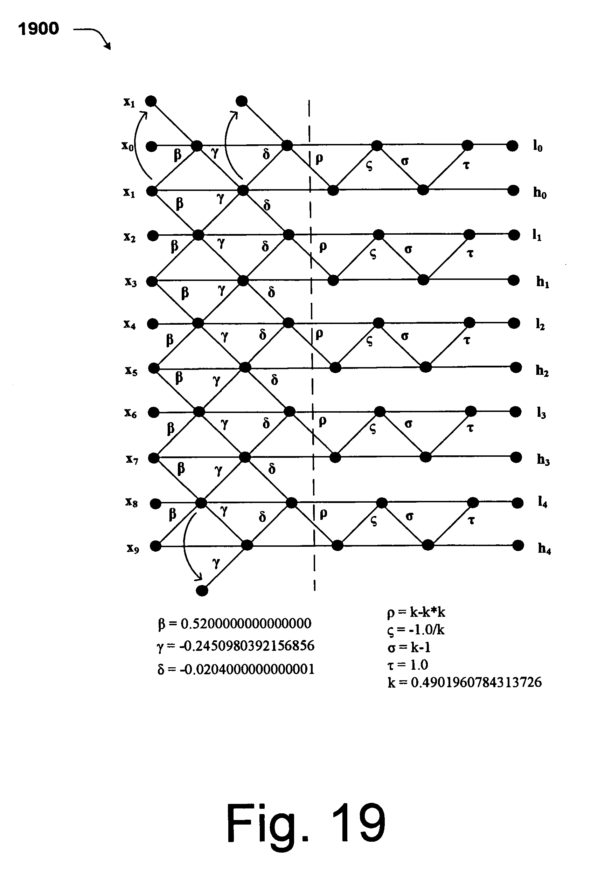

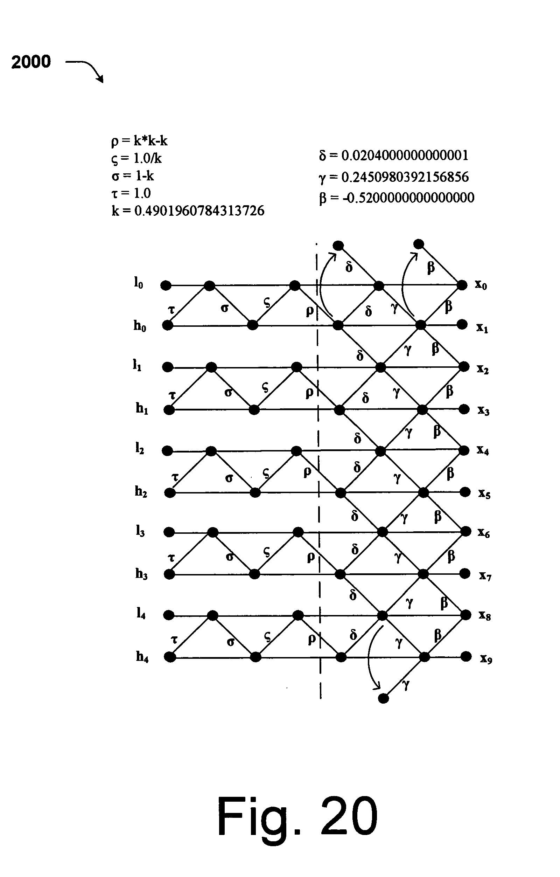

In another exemplary implementation, a 7/5 wavelet transform may be used. FIGURES 19-20 illustrate the integer lifting structures 1900 and 2000 associated with the 7/5 wavelet transform and the inverse 7/5 wavelet transform, respectively. Again, the symbols as defmed for FIGURE 15 describe integer lifting structures 1900 and 2000.
The corresponding low pass analysis filter coefficients and high pass analysis filter coefficients are:

L(7):

0.0012745098039216
0.0024509803921569,
0.2487254901960785,
0.4950980392156863,
0.2487254901960785,
0.0024509803921569,
0.0012745098039216

H(5):

-0.1300000000000000,
-0.2500000000000000,
0.7600000000000000,
-0.2500000000000000,
-0.1300000000000000.

The low pass synthesis filter coefficients and high pass synthesis filter coefficients are as follows:

L(5):

-0.1300000000000000,
0.2500000000000000,
0.7600000000000000,
0.2500000000000000,
-0.1300000000000000

H(7):

-0.0012745098039216,
0.0024509803921569,
-0.2487254901960785,
0.4950980392156863,
-0.2487254901960785,
0.0024509803921569,
-0.0012745098039216.

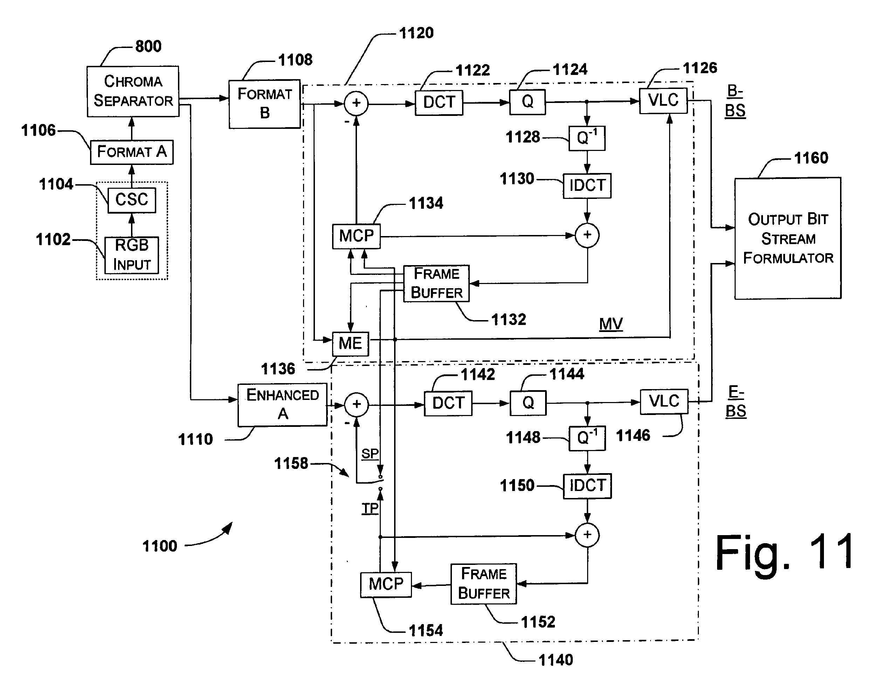

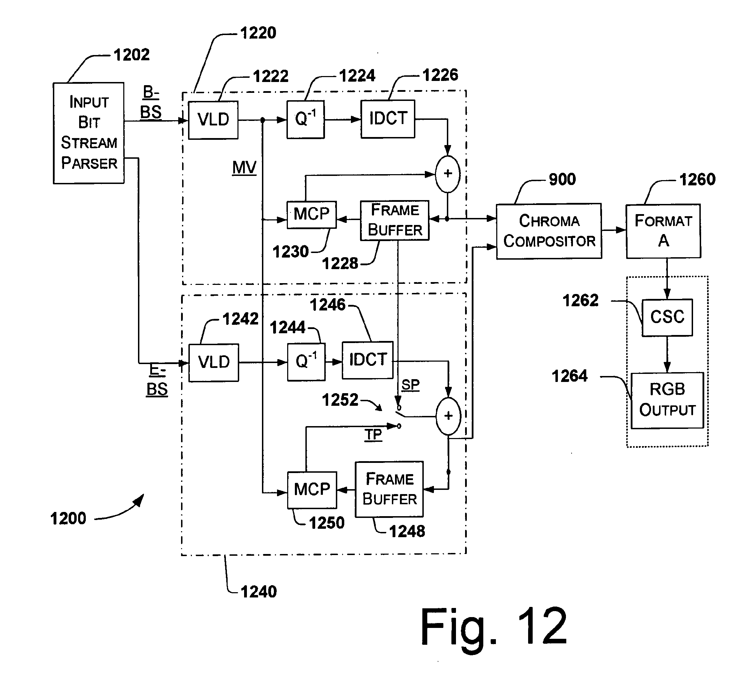

FIGURE 11 is a block diagram of an encoder 1100 which operates in accordance with the present color space coding framework. The encoder 1100 includes a base format encoder (represented generally within box 1120), an enhanced format encoder (represented generally within box 1140), and an output bit stream formulator 1160. In addition, encoder 1100 may include a chroma separator 800 as shown in FIGURE 8 and described above. The encoder 1100 is a computing device, such as shown in FIGURE 7, which implements the functionality of the base format encoder, the enhanced format encoder, the bit stream formulator, and the optional chroma separator 800 in hardware, software or in any combination of hardware/software in a manner that produces the desired bit streams that are input into an associated decoder shown in FIGURE 12 and described below.

In overview, encoder 1100 processes two streams, the base stream and the enhanced stream, in accordance with the present color space coding framework. One advantage of encoder 1100 is the ability to provide an additional prediction coding mode, spatial prediction (SP), along with the Intra and Inter prediction coding modes. As will be described in detail below, encoder 1100 provides the spatial prediction for the enhanced chrominance blocks using the base chrominance blocks from the same frame. Due to the high correlation between the enhanced chrominance blocks and the base chrominance blocks, the spatial prediction (SP) can provide a very efficient prediction mode.

In one embodiment, encoder 1100 accepts the output streams generated from the chroma separator 800. In another embodiment, chroma separator 800 is included within encoder 1100. For either embodiment, chroma separator 800 accepts input encoded in a first encoded format 1106, referred to as format A. The generation of the first encoded format 1106 is performed in a conventional manner known to those skilled in the art of video encoding. In certain situations, the generation of the first encoded format is accomplished by converting a format from another color space, such as the RGB color space. When this occurs, a color space converter (CSC) 1104 is used. The color space converter 1104 accepts an input 1102 (e.g., RGB input) associated with the other color space. The color space converter 1104 then converts the input 1102 into the desired first encoded format 1106. The color space converter 1104 may use any conventional mechanism for converting from one color space to another color space. For example, when the conversion is between the RGB color space and the YUV color space, the color space converter 1104 may apply known transforms that are often represented as a set of three equations or by a matrix. One known set of equations defined by one of the standards is as follows:

$$Y = 0.299 \times R + 0.587 \times G + 0.114 \times B$$

$$U = -0.299 \times R - 0.587 \times G + 0.886 \times B$$

$$Y = 0.701 \times R - 0.587 \times G - 0.114 \times B.$$

The transform is also reversible, such that given a set of YUV values, a set of RGB values may be obtained. When a color space conversion is necessary, the processing performed by the chroma separator 800 may be combined with the processing performed in the color space converter 1104. The chroma separator 800 and color space conversion 1804 may be included as elements with encoder 1100. Alternatively, encoder 1100 may accept the outputs generated by the chroma separator 800.

As described above in conjunction with FIGURE 8, the chroma separator 800 is configured to output a base format stream 1108 and at least one enhanced format stream 1110. The base format stream 1108 is processed through the base encoder 1120 and the enhanced format stream is processed through the enhanced encoder 1140.

Base encoder 1120 is any conventional encoder for the base format stream 1108. In general, base encoder 1120 attempts to minimize the amount of data that is output as the base bit stream (B-BS), which will typically be transmitted through some media so that the encoded video may be played. The conventional base encoder 1120 includes conventional elements, such as a discrete cosine transform (DCT) 1122, a quantization (Q) process 1124, a variable length coding (VLC) process 1126, an inverse quantization ($Q^{-1}$) process 1128, an inverse DCT (IDCT) 1130, a frame buffer 1132, a motion compensated prediction (MCP) process 1134, and a motion estimation (ME) process 1136. While the elements of the base encoder 1120 are well known, the elements will be briefly described to aid in the understanding of the present color space coding framework.

However, before describing the conventional base encoder 1120, terminology used throughout the following discussion is defmed. A frame refers to the lines that make up an image. An Intraframe (I-frame) refers to a frame that is encoded using only information from within one frame. An Interframe, also referred to as a Predicted frame (P-frame), refers to a frame that uses information from more than one frame.

Base encoder 1120 accepts a frame of the base format 1108. The frame will be encoded using only information from itself. Therefore, the frame is referred to as an I-frame. Thus, the I-frame proceeds through the discrete cosine transform 1122 that converts the I-frame into DCT coefficients. These DCT coefficients are input into a quantization process 1124 to form quantized DCT coefficients. The quantized DCT coefficients are then input into a variable length coder (VLC) 1126 to generate a portion of the base bit stream (B-BS). The quantized DCT coefficients are also input into an inverse quantization process 1128 and an inverse DCT 1130. The result is stored in frame buffer 1132 to serve as a reference for P-frames.

The base encoder 1120 processes P-frames by applying the motion estimation (ME) process 1134 to the results stored in the frame buffer 1132. The motion estimation process 1134 is configured to locate a temporal prediction (TP), which is referred to as the motion compensated prediction (MCP) 1134. The MCP 1134 is compared to the I-frame and the difference (i.e., the residual) proceeds through the same process as the I-frame. The motion compensated prediction (MCP) 1134 in the form of a motion vector (MV) is input into the variable length coder (VLC) 1126 and generates another portion of the base bit stream (B-BS). Finally, the inverse quantized difference data is added to the MCP 1134 to form the reconstructed frame. The frame buffer is updated with the reconstructed frame, which serves as the reference for the next P-frame. It is important to note that the resulting base bit stream (B-BS) is fully syntactically compatible with conventional decoders available in existing devices today that decode base stream B format.

Enhanced encoder 1140 attempts to minimize the amount of data that is output as the enhanced bit stream (E-BS). This enhanced bit stream is typically transmitted through some media, and optionally decoded, in order to play the higher quality encoded video. While having an enhanced encoder 1140 within encoder 1100 has not previously been envisioned, enhanced encoder 1140 includes several conventional elements that operate in the same manner as described above for the base encoder. The conventional elements include as a discrete cosine transform (DCT) 1142, a quantization (Q) process 1144, a variable length coding (VLC) process 1146, an inverse quantization ($Q^{-1}$) process 1148, an inverse DCT (IDCT) 1150, a frame buffer 1152, and a motion compensated prediction (MCP) process 1154. One will note that a motion estimation process is not included within the enhanced encoder 1140 because the enhanced stream does not include any luminance blocks containing the Y component. Motion vectors (MVs) are derived from Y components. However, in accordance with the present color space coding framework, enhanced encoder 1140 includes a mode selection switch 1158 that selectively predicts a P-frame. Switch 1158 may select to predict the P-frame from a previous reference generated from the enhanced stream stored in frame buffer 1152 or may select to "spatially" predict (SP) the P-frame using a reference from the base stream that is stored in the frame buffer 1132 for the current frame. Spatial prediction provides a very efficient prediction method due to the high correlation between enhanced chrominance blocks in the enhanced stream and chrominance blocks in the base stream. Thus, the present color space coding framework provides greater efficiency in prediction coding and results in a performance boost in comparison to traditional encoding mechanisms. The output of enhanced encoder 1140 is the enhanced bit stream (E-BS).

Although the conventional elements in the base encoder 1120 and the enhanced encoder 11140 are illustrated separately, in one embodiment, the base encoder 1120 and the enhanced encoder 1140 may share one or more of the same conventional elements. For example, instead of having two DCTs 1122 and 1142, one DCT may be used by both the base encoder 1120 and by the enhanced encoder 1140. Thus, developing an encoder 1100 in accordance with the present color space coding framework requires minimal extra effort in either hardware, software, or any combination to accommodate the enhanced stream. In addition, other advanced encoding techniques developed for the base encoder 1220 can be easily applied to the present color space coding framework. For example, the present color space coding framework operates when there are bi-directionally predicted frames (B-frames).

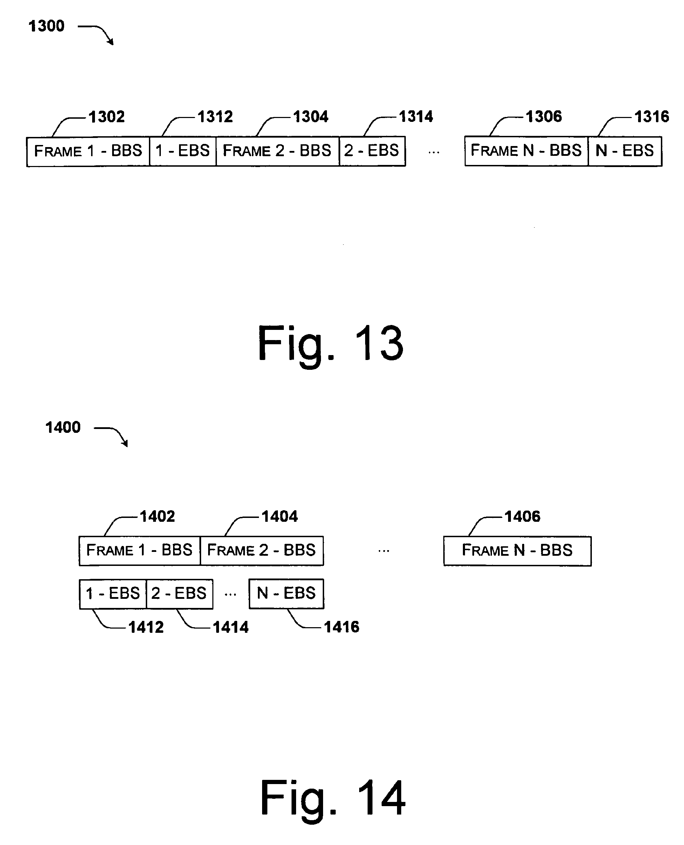

The output bit stream formulator 1160 combines the enhanced bit stream (E-BS) with the base bit stream (B-BS) to form a final output bit stream. Exemplary formats for the final output bit stream are illustrated in FIGURES 13 and 14 and are described in conjunction with those figures.

FIGURE 12 is a block diagram of a decoder which incorporates the present color space coding framework. In overview, the decoder 1200 may perform a simple bit stream truncation to obtain the lower quality video format. Thus, the expensive transcoding process is not necessary. In general, decoder 1200 reverses the process performed by encoder 1100. Decoder 1200 accepts the base bit stream (B-BS) and the enhanced bit stream (E-BS). The base bit stream and the enhanced bit stream may have been parsed with an input bit stream parser 1202 included within the decoder or external to the decoder. The decoder 1200 includes a base format decoder (represented generally within box 1220) and an enhanced format decoder (represented generally within box 1240). The base decoder 1220 processes the base bit stream and the enhanced decoder 1240 processes the enhanced bit stream. In addition, decoder 1200 may include a chroma compositor 900 as shown in FIGURE 9 and described above. The decoder 1200 is a computing device, such as shown in FIGURE 7, which implements the functionality of the base format decoder, the enhanced format decoder, and the optional chroma compositor 900 in hardware, software or in any combination of hardware/software in a manner that produces the desired format A 1260.

In overview, decoder 1200 inputs two streams, the base bit stream (B-BS) and the enhanced bit stream (E-BS) generated in accordance with the present color space coding framework. The decoder 1200 has the ability to decode the prediction coding mode, spatial prediction (SP), provided by the encoder 1100.

In one embodiment, decoder 1200 includes the chroma compositor 900. In another embodiment, the chroma compositor 900 is a separate device from the decoder 1200. For either embodiment, chroma compositor 900 accepts the two streams containing the values for the luminance blocks and chrominance blocks for a base format and the values for the chrominance blocks for the enhanced format and merges them into format A 1260 as explained in conjunction with FIGURE 9. In certain situations, format A 1260 is converted into a format of another color space, such as the RGB color space. When this occurs, a color space converter (CSC) 1262 is used. The color space converter 1262 accepts format A 1260 as an input and converts input 1260 into output 1264 (e.g., RGB output), which is associated with the other color space. The color space converter 1262 may use any conventional mechanism for converting from one color space to another color space. For example, when the conversion is between the RGB color space and the YUV color space, the color space converter 1262 may apply known transforms as described above. When a color space conversion is necessary, the processing performed by the chroma compositor 900 may be combined with the processing performed in the color space converter 1262. The chroma compositor 900 and color space conversion 1262 may be included as elements within decoder 1200. Alternatively, decoder 1200 may supply inputs to an external the chroma compositor 900.

Base decoder 1220 is any conventional encoder for the base bit stream (B-BS). In general, base decoder 1220 reconstructs the YUV values that were encoded by the base encoder 1120. The conventional base decoder 1220 includes conventional elements, such as a variable length decoding (VLD) process 1222, an inverse quantization ($Q^{-1}$) process 1224, an inverse discrete cosine transform (IDCT) 1226, a frame buffer 1228, and a motion compensated prediction (MCP) process 1230. Again, the elements of the base decoder 1220 are well known. Therefore, the elements will be briefly described to aid in the understanding of the present color space coding framework.

The base decoder 1220 inputs the base bit stream into the variable length decoder (VLD) 1222 to retrieve the motion vectors (MV) and the quantized DCT coefficients. The quantized DCT coefficient are input into the inverse quantization process 1224 and the inverse DCT 1226 to form the difference data. The difference data is added to its motion compensated prediction 1230 to form the reconstructed base stream that is input into the chromo compositor 900. The result is also stored in the frame buffer 1228 to server as a reference for decoding P-frames.

Enhanced decoder 1240 reconstructs the UV values that were encoded by the enhanced encoder 1140. While having an enhanced decoder 1240 within decoder 1200 has not been previously envisioned, enhanced decoder 1240 includes several conventional elements that operate in the same manner as described above for the base decoder 1220. The enhanced decoder 1240 includes conventional elements, such as a variable length decoding (VLD) process 1242, an inverse quantization ($Q^{-1}$) process 1244, an inverse discrete cosine transform (DCT) 1246, a frame buffer 1248, and a motion compensated prediction (MCP) process 1250.

The flow of the enhanced bit stream through the enhanced decoder 1240 is identical to the base decoder 1220, except that the difference data may be selectively added to its motion compensated prediction (MCP) or added to its spatial prediction (SP), as determined by the mode information switch 1252. The outcome of the enhanced decoder 1240 is the reconstructed enhanced stream that contains the values for the "extra" chrominance blocks for the current frame.

The base stream and the enhanced stream are then input into the chroma compositor, which processes the streams as described above to reconstruct format A. Although the conventional elements in the base decoder 1220 and the enhanced decoder 1240 are illustrated separately, in one embodiment, the base decoder 1220 and the enhanced decoder 1240 may share one or more of the same conventional elements. For example, instead of having two inverse DCTs 1226 and 1246, one inverse DCT may be used by both the base decoder 1420 and by the enhanced decoder 1240. Thus, developing a decoder in accordance with the present color space coding framework requires minimal extra effort in either hardware, software, or any combination to accommodate the enhanced stream. In addition, other advanced decoding techniques developed for the base decoder 1420 can be easily applied to the present color space coding framework. For example, the present color space coding framework operates when there are bi-directionally predicted frames (B-frames).

Thus, by coding formats using the present color space coding framework, the conversion between two formats may be achieved via bit truncation, rather than the expensive transcoding process. Thus, there is no transcoding process performed on the formats to convert from one to another.

**Exemplary Bit Streams**

It is envisioned that the output bit stream formation process 1160 shown in FIGURE 11 may organize the resulting base bit stream (B-BS) and the enhanced bit stream (E-BS) in numerous ways. FIGURES 13 and 14 illustrate two exemplary bit streams. For convenience, the exemplary bit streams illustrate the organization of the base bit stream, in relation to the enhanced bit stream, and omit other information that is commonly included in transport stream packets, such as packet identifiers, sequence numbers, and the like. In addition, exemplary bit streams may include an indicator that indicates that the bit stream supports format A and base format B.

FIGURE 13 is a graphical representation of an exemplary bit stream 1300 for transmitting the multiple bit streams shown in FIGURES 11 and 12. In overview, bit stream 1300 embeds the enhanced bit stream (E-BS) within the base bit stream (B-BS). Thus, bit stream 1300 includes B-BS information 1302, 1304, and 1306, which alternates with E-BS information 1312, 1314, and 1316. In practice, if the base bit stream corresponds to YUV420 format and the enhanced bit stream includes chrominance blocks for YUV422 format, bit stream 1300 allows a YUV422 decoder to sequentially decode all the frames. However, a YUV420 decoder that decodes bit stream 1300 must skip the E-BS frames. Bit stream 1300 is suitable for streaming/broadcasting applications.

FIGURE 14 is a graphical representation of another exemplary bit stream 1400 for transmitting the multiple bit streams shown in FIGURES 11 and 12. In overview bit stream 1400 concatenates the enhanced bit stream to the end of the base bit stream. Thus bit stream 1400 includes consecutive frames of base bit stream (e.g., frames 1402, 1404, 1406) followed by consecutive frames of enhanced bit stream (e.g., frames 1412, 1414, 1416). In practice, if the base bit stream corresponds to the YUV420 format and the enhanced bit stream includes chrominance blocks for the YUV422 format, bit stream 1400 allows a YUV420 decoder to sequentially decode all the frames without encountering the enhanced bit stream. The YUV420 can terminate the decoding process after all the base bit frames (e.g., 1402, 1404, and 1406) are decoded. However, a YUV422 decoder must seek and decode the base bit stream and the enhanced bit stream before proceeding to the next frame. The YUV422 decoder may utilize two pointers to sequentially access the base bit stream and the enhanced bit stream. Bit stream 1400 is suitable for down-and-play applications.

Bit stream 1400 may also be separated into different individual files. In this embodiment, the base bit stream represents a standalone stream and would be fully decodable by a YUV420 decoder and would not require any modifications to existing YUV420 decoders. A YUV422 decoder would process the two bit stream files simultaneously. Bit stream 1400 may be advantageously implemented within video recording devices, such as digital video camcorders. Bit stream 1400 would allow recording both a high quality and low quality stream. If a consumer realizes that additional recording is desirable but the current media has been consumed, an option on the digital video camcorder may allow the consumer to conveniently delete the high quality stream and keep the low quality stream so that additional recording may resume.

The following description sets forth a specific embodiment of a color space coding framework that incorporates elements recited in the appended claims. The embodiment is described with specificity in order to meet statutory requirements. However, the description itself is not intended to limit the scope of this patent. Rather, the inventors have contemplated that the claimed invention might also be embodied in other ways, to include different elements or combinations of elements similar to the ones described in this document, in conjunction with other present or future technologies.

**Claims**

1. A method comprising:

   receiving a video information stream including color information formatted according to a first color space sampling format a pre-determined number of bits;
   splitting the color information into a base information stream formatted according to a second color space sampling format having less than the pre-determined number of bits and into an enhanced information stream; and
   providing an indicator with at least one of the base information stream and the enhanced information stream that indicates a capability for providing video information according to the first color space sampling format or the second color space sampling format.

2. The method of claim 1, further comprising encoding the enhanced information stream using spatial information related to the base information stream.

3. The method of claim 1, further comprising selectively encoding the enhanced information stream using spatial information related to the base information stream or using a previous reference related to the enhanced information stream.

4. The method of claim 1, further comprising encoding the base information stream into a base encoded bit stream, encoding the enhanced information stream into an enhanced encoded bit stream, and combining the base encoded bit stream and the enhanced encoded bit stream into an output bit stream.

5. The method of claim 4, wherein the output bit stream comprises an interleaved stream of the enhanced encoded bit stream and the base encoded bit stream.

6. The method of claim 4, wherein the output bit stream comprises a concatenated stream of the enhanced encoded bit stream and the base encoded bit stream.

7. The method of claim 6, wherein the enhanced encoded bit stream follows the base encoded bit stream.

8. The method of claim 4, wherein the output bit stream comprises a first file for the enhanced encoded bit stream and a second file for the base encoded bit stream.

9. The method of claim 1, wherein the color information includes chrominance blocks.

10. The method of claim 1, wherein the first color space sampling format comprises a YUV422 format and the second color space sampling format comprises a YUV420 format.

11. A computer-readable medium having computer-executable instructions, the instructions comprising:

    converting a first multimedia format into a base stream and an enhanced stream, the base stream corresponding to another multimedia format and the enhanced stream including information that when combined with the base stream re-constructs the first multimedia format.

12. The computer-readable medium of claim 11, wherein the multimedia format comprises an encoded video format.

13. The computer-readable medium of claim 11, wherein converting the first multimedia format into the base stream and the enhanced stream comprises storing chrominance blocks associated with the other multimedia format in the base stream and storing the chrominance blocks that are not associated with the other multimedia format in the enhanced stream.

14. The computer-readable medium of claim 11, further comprising encoding the base stream into a base encoded bit stream, encoding the enhanced stream into an enhanced encoded bit stream, and combining the base encoded bit stream and the enhanced encoded bit stream into an output bit stream.

15. The computer-readable medium of claim 14, wherein the output bit stream comprises an interleaved stream of the enhanced encoded bit stream and the base encoded bit stream.

16. The computer-readable medium of claim 14, wherein the output bit stream comprises a concatenated stream of the enhanced encoded bit stream and the base encoded bit stream.

17. The computer-readable medium of claim 16, wherein the enhanced encoded bit stream follows the base encoded bit stream.

18. The computer-readable medium of claim 14, wherein the output bit stream comprises a first file for the enhanced encoded bit stream and a second file for the base encoded bit stream.

19. A device comprising:

a base encoder for encoding a base information stream formatted according to a first color space sampling format; and
an enhanced encoder for encoding an enhanced information stream that contains color space information unavailable in the first color space sampling format.

20. The device of claim 19, wherein the enhanced encoder encodes the enhanced information using spatial information related to the base information stream.

21. The device of claim 19, further comprising an output stream formulator that combines the encoded enhanced information stream and the encoded base information stream into an output stream.

22. The device of claim 21, wherein the output stream comprises the encoded enhanced information stream interleaved with the encoded base information stream.

23. The device of claim 21, wherein the output stream comprises the encoded enhanced information stream concatenated to the encoded base information stream.

24. The device of claim 21, wherein the output stream comprises a first file containing the encoded enhanced information stream and a second file containing the encoded base information stream.

25. The device of claim 24, wherein device comprises a digital video camera.

26. A device comprising:

a base decoder for decoding an encoded base bit stream associated with a first color space sampling format; and
an enhanced decoder for decoding an encoded enhanced bit stream that contains color space information unavailable in the first color space sampling format.

27. The device of claim 26, wherein the enhanced decoder decodes the encoded enhanced bit stream using spatial information related to the encoded base bit stream.

28. The device of claim 26, further comprising a compositor for generating a second color space sampling format from the encoded enhanced bit stream and the encoded base bit stream.

29. The device of claim 26, wherein the device comprises a set-top box.

30. A device comprising:

an input for receiving video information;
a circuit for formatting part of the video information according to a color space sampling format and formatting another part of the video information according to another format; and

a circuit for storing the part of the video information and the other part of the video information.

**31.** The device of claim 30, wherein the circuit for formatting comprises a programmable circuit.

**32.** The device of claim 30, wherein the circuit for storing comprises a programmable circuit.

**33.** The device of claim 30, wherein the input comprises a sensor.

**34.** The device of claim 30, wherein the input comprises at least one CCD array.

100 ──→

MB₁ MB₂ MB₃ MB₄

P₁
P₂
P₃
P₄

YUV444 FORMAT

MBN

# Fig. 1
# (Prior Art)

200 ──→

MB₁ MB₂ MB₃ MB₄

P₁
P₂
P₃
P₄

YUV422 FORMAT

MBN

# Fig. 2
# (Prior Art)

300 — MB₁ MB₂ MB₃ MB₄

P₁
P₂
P₃
P₄

YUV420 FORMAT

# Fig. 3
# (Prior Art)

400 — MB₁ MB₂

P₁
P₅
P₉
P₁₃

YUV411 FORMAT

# Fig. 4
# (Prior Art)

# Fig. 5
# (Prior Art)

# Fig. 6
# (Prior Art)

COMPUTING DEVICE

708 — 700

704 — SYSTEM MEMORY

ROM/RAM

OPERATING SYSTEM **705**

PROGRAM MODULES **706**

PROGRAM DATA **707**

PROCESSING UNIT **702**

REMOVABLE STORAGE — 709

NON-REMOVABLE STORAGE — 710

INPUT DEVICE(S) — 712

OUTPUT DEVICE(S) — 714

COMMUNICATION CONNECTION(S) — 716

718 — OTHER COMPUTING DEVICES

# Fig. 7

**CHROMA SEPARATOR** — 800

FORMAT A → LOW PASS FILTER 804 → DOWN-SAMPLER 808 → BASE FORMAT B

FORMAT A → HIGH PASS FILTER 806 → DOWN-SAMPLER 810 → ENHANCED FORMAT B

# Fig. 8

**CHROMA COMPOSITOR** — 900

BASE FORMAT B → UP-SAMPLER 904 → SYNTHESIS FILTER 908 → MERGER 912 → FORMAT A

ENHANCED FORMAT B → UP-SAMPLER 906 → SYNTHESIS FILTER 910 → MERGER 912

# Fig. 9

EP 1 542 476 A2

Fig. 10

Fig. 11

OUTPUT BIT STREAM FORMULATOR — 1160

CHROMA SEPARATOR — 800

FORMAT A — 1106
CSC — 1104
RGB INPUT — 1102

FORMAT B — 1108

B-BS

DCT — 1120
Q — 1122
VLC — 1124 / 1126
Q⁻¹ — 1128
IDCT — 1130
FRAME BUFFER — 1132
MCP — 1134
ME — 1136

ENHANCED A — 1110

E-BS

DCT — 1142
Q — 1144
VLC — 1146
Q⁻¹ — 1148
IDCT — 1150
FRAME BUFFER — 1152
MCP — 1154

SP / TP — 1158

MV

1100

1140

22

Fig. 12

EP 1 542 476 A2

1300

1302  1312  1304  1314  1306  1316

| FRAME 1 - BBS | 1 - EBS | FRAME 2 - BBS | 2 - EBS | ... | FRAME N - BBS | N - EBS |

# Fig. 13

1400

1402  1404  1406

| FRAME 1 - BBS | FRAME 2 - BBS | ... | FRAME N - BBS |

| 1 - EBS | 2 - EBS | ... | N - EBS |

1412  1414  1416

# Fig. 14

1500

$$\alpha = -1.586134342$$
$$\beta = -0.05298011854$$
$$\gamma = 0.8829110762$$
$$\delta = 0.4435068522$$

$$\rho = k - k * k$$
$$\varsigma = -1.0/k$$
$$\sigma = k - 1$$
$$\tau = 1.0$$
$$k = 1.0/1.32$$

# Fig. 15

$\alpha = 1.586134342$
$\beta = 0.05298011854$
$\gamma = -0.8829110762$
$\delta = -0.4435068522$

$\rho = k*k-k$
$\varsigma = 1.0/k$
$\sigma = 1-k$
$\tau = -1.0$
$k = 1.0/1.32$

1600

Fig. 16

Fig. 17

**1800**

$\rho = k*k-k$
$\varsigma = 1.0/k$
$\sigma = 1-k$
$\tau = -1.0$
$k = 2.0/3.0$

$\alpha = 0.5$
$\beta = -0.25$

# Fig. 18

1900

$\beta = 0.5200000000000000$
$\gamma = -0.2450980392156856$
$\delta = -0.0204000000000001$

$\rho = k-k*k$
$\varsigma = -1.0/k$
$\sigma = k-1$
$\tau = 1.0$
$k = 0.4901960784313726$

# Fig. 19

2000

$\rho = k*k-k$
$\varsigma = 1.0/k$
$\sigma = 1-k$
$\tau = 1.0$
$k = 0.4901960784313726$

$\delta = 0.0204000000000001$
$\gamma = 0.2450980392156856$
$\beta = -0.5200000000000000$

Fig. 20